# EUROPEAN PATENT APPLICATION

(11) **EP 4 604 638 A1**
(43) Date of publication of application: **20.08.2025**
(21) Application number: 23876634.9
(22) Date of filing: 09.10.2023
(51) Int. Cl.: H04W 72/04

(54) **METHOD AND APPARATUS USED IN NODE FOR WIRELESS COMMUNICATION**

(30) Priority: 13.10.2022 CN 202211252728
(71) Applicant: Apogee Networks, LLC, Dallas, TX 75201 (US)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/123480
(87) International publication number: WO 2024/078432

(57) **Abstract**

Disclosed in the present application are a method and apparatus used in a node for wireless communication. The method comprises: a node first receiving a first information block, wherein the first information block is used for determining a first reference signal resource set; and then sending a target reference signal, wherein the first reference signal resource set comprises K1 reference signal resources; the target reference signal occupies one of the K1 reference signal resources; the K1 reference signal resources at least comprise a first reference signal resource and a second reference signal resource; in a given resource unit, the first reference signal resource occupies more resource particles than the second reference signal resource; the first reference signal resource set is used for sidelink positioning; and any resource particle occupied by the second reference signal resource is occupied by the first reference signal resource. The present application is conducive to improving the congestion control efficiency, thereby improving the positioning accuracy.

## Description

### Technical Field

This application relates to a transmission method and apparatus used in a wireless communication system, and in particular, to a positioning-related solution and apparatus in wireless communications.

### Related Art

Positioning is an important application in the field of wireless communications. With the emergence of new applications such as V2X (Vehicle to everything) or industrial Internet of Things, a system imposes higher requirements on positioning accuracy or timeliness. In a 3GPP (3rd Generation Partner Project) RAN (Radio Access Network) # 94e meeting, a research topic about positioning enhancement is approved and initiated.

### SUMMARY

According to a work plan in RP-213588, NR Rel-18 needs enhanced positioning technologies that support sidelink positioning (SL Positioning), among which mainstream sidelink positioning technologies include those based on an SL (Sidelink) RTT (Round Trip Time), an SL AOA (Angle-of-Arrival), an SL TDOA (Time Difference Of Arrival), and an SLAOD (Angle-of-Departure), and the like, and the execution of these technologies needs to rely on measurement of an SL PRS (Positioning Reference Signal). Since UE (User Equipment) autonomously selects a resource to transmit an SL PRS, a conventional positioning procedure or a location information feedback solution needs to be further enhanced, especially the way of avoiding interference and collision when different terminals autonomously select the SL PRS, which needs to be redesigned and enhanced.

In view of the foregoing problem, this application discloses a positioning solution. It should be noted that in the description of this application, only a V2X scenario is used as a typical application scenario or example. This application is also applicable to scenarios other than V2X that face similar problems, for example, public safety, industrial Internet of Things, and cellular networks, and achieves a technical effect similar to that in an NR V2X scenario. In addition, although the motive of this application is aimed at a scenario in which a sender of a radio signal used for positioning measurement determines the transmission of a positioning reference signal through channel sensing, this application is still applicable to a scenario in which the positioning reference signals are uniformly configured via a control node, e.g., the unified configuration of an LMF (Location Management Function). Using a unified solution for different scenarios also helps to reduce hardware complexity and costs. Without conflict, the embodiments in any node of this application and the features of the embodiments may be applied to any other node. Without conflict, the embodiments and the features of the embodiments can be arbitrarily combined with each other.

Where required, reference may be made to 3GPP standards TS38.211, TS38.212, TS38.213, TS38.214, TS38.215, TS38.321, TS38.331, TS38.305, and TS37.355 to help understand this application.

This application discloses a method used in a first node for wireless communication, including:
receiving a first information block, the first information block being used for determining a first reference signal resource set;
transmitting a target reference signal,
where the first reference signal resource set includes K1 reference signal resources, K1 being a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
   - a same subchannel;
   - a bandwidth corresponding to a same PRB (Physical Resource Block);
   - a same BWP (Bandwidth Part);
   - a same number of consecutive multi-carrier symbols; and
   - a same slot.

As an embodiment, one feature of the above-mentioned method is in that: there is a correlation between multiple reference signal resources used for SL positioning in terms of occupied REs (Resource Elements), and reference signal resources using different time-frequency densities attempt to occupy a same RE to ensure that they will not collide with reference signal resources in other reference signal resource sets.

As an embodiment, another feature of the above-mentioned method is in that: the first reference signal resource and the second reference signal resource use a nested structure similar to those of PDCCH (Physical Downlink Control Channel, Physical Downlink Control Channel) candidates. That is, REs occupied by the second reference signal resource are a subset of REs occupied by the first reference signal resource, thereby guaranteeing that reference signal resources using different time-frequency densities are nested to avoid collision and a conflict.

As an embodiment, yet another feature of the above-mentioned method is in that: multiple reference signal resources in a reference signal resource set configured for one or more terminals conforms to the nested structure. That is, the occupied REs are nested while corresponding to different time-frequency densities. In turn, one or more reference signal resources in this reference signal resource set are occupied to transmit a positioning reference signal, which will not interfere and affect other resources, so that the spectrum efficiency is improved.

According to an aspect of this application, the method includes:
performing channel measurement on M1 candidate reference signal resources in a first time window,
where the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs (Received Signal Strength Indicators); a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

As an embodiment, one feature of the above-mentioned method is in that: the transmission of the target reference signal is based on channel sensing.

As an embodiment, one feature of the above-mentioned method is in that: the transmission of target reference signal is based on CBR (Channel Busy Ratio) measurement.

As an embodiment, one feature of the above-mentioned method is in that: the transmission of target reference signal is based on CR (Channel Occupancy Ratio) estimation.

According to an aspect of this application, the M1 candidate reference signal resources correspond to same configuration information, the configuration information including at least one of a comb size, number of occupied symbols, number of occupied subcarriers, a repetition factor, a periodicity, or a transmit power value.

As an embodiment, one feature of the above-mentioned method is in that: the M1 candidate reference signal resources correspond to M1 reference signals using a same time-frequency density that are used for positioning.

According to an aspect of this application, the first reference signal resource and the second reference signal resource correspond to different configuration information, the configuration information including at least one of a comb size, number of occupied symbols, number of occupied subcarriers, a repetition factor, a periodicity, or a transmit power value.

As an embodiment, one feature of the above-mentioned method is in that: the first reference signal resource and the second reference signal resource correspond to two reference signals using different time-frequency densities that are used for positioning, respectively.

According to an aspect of this application, the first reference signal resource and the second reference signal resource correspond to a first threshold and a second threshold, respectively, the first threshold and the second threshold being different, and both the first threshold and the second threshold being used for sidelink congestion control.

As an embodiment, one feature of the above-mentioned method is in that: the reference signals using different time-frequency densities that are used for positioning correspond to different threshold values that are compared with measured RSSI values to more accurately determine the transmission of positioning reference signals.

According to an aspect of this application, the K1 reference signal resources include the M1 candidate reference signal resources, K1 being a positive integer not less than M1.

According to an aspect of this application, any one of M2 RSSIs obtained by measurement exceeds each of M2 candidate reference signal resources of the M1 candidate reference signal resources by the target threshold; the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool includes Q reference signal resources within the first time window, any one of the M2 candidate reference signal resources is one of the Q reference signal resources, and Q is a positive integer greater than M2.

This application discloses a method used in a second node for wireless communication, including:
receiving a target reference signal,
where the first reference signal resource set includes K1 reference signal resources, K1 being a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
   - a same subchannel;
   - a bandwidth corresponding to a same PRB;
   - a same BWP;
   - a same number of consecutive multi-carrier symbols; and
   - a same slot.

According to an aspect of this application, the method includes:
receiving a first information block;
where the first information block is used for determining a first reference signal resource set.

According to an aspect of this application, the method includes:
transmitting a first information block;
where the first information block is used for determining a first reference signal resource set.

According to one aspect of this application, a sender of the target reference signal performs channel measurement on M1 candidate reference signal resources in a first time window; the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs; a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

According to an aspect of this application, the M1 candidate reference signal resources correspond to same configuration information, the configuration information including at least one of a comb size, number of occupied symbols, number of occupied subcarriers, a repetition factor, a periodicity, or a transmit power value.

According to an aspect of this application, the first reference signal resource and the second reference signal resource correspond to different configuration information, the configuration information including at least one of a comb size, number of occupied symbols, number of occupied subcarriers, a repetition factor, a periodicity, or a transmit power value.

According to an aspect of this application, the first reference signal resource and the second reference signal resource correspond to a first threshold and a second threshold, respectively, the first threshold and the second threshold being different, and both the first threshold and the second threshold being used for sidelink congestion control.

According to an aspect of this application, the K1 reference signal resources include the M1 candidate reference signal resources, K1 being a positive integer not less than M1.

According to an aspect of this application, any one of M2 RSSIs obtained by measurement exceeds each of M2 candidate reference signal resources of the M1 candidate reference signal resources by the target threshold; the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool includes Q reference signal resources within the first time window, any one of the M2 candidate reference signal resources is one of the Q reference signal resources, and Q is a positive integer greater than M2.

According to an aspect of this application, the method includes:
transmitting location information;
where measurement on the target reference signal is used for generating the location information.

This application discloses a method used in a third node for wireless communication, including:
transmitting a first information block, the first information block being used for determining a first reference signal resource set;
receiving location information;
where the first reference signal resource set includes K1 reference signal resources, K1 being a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; measurement performed by a recipient of the target reference signal on the target reference signal is used for generating the location information, and the recipient of the target reference signal transmits the location information; and a definition of the given resource unit includes at least one of the following:
   - a same subchannel;
   - a bandwidth corresponding to a same PRB;
   - a same BWP;
   - a same number of consecutive multi-carrier symbols; and
   - a same slot.

This application discloses a first node for wireless communication, including:
a first receiver, configured to receive a first information block, the first information block being used for determining a first reference signal resource set;
a first transmitter, configured to transmit a target reference signal,
where the first reference signal resource set includes K1 reference signal resources, K1 being a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
   - a same subchannel;
   - a bandwidth corresponding to a same PRB;
   - a same BWP;
   - a same number of consecutive multi-carrier symbols; and
   - a same slot.

This application discloses a second node for wireless communication, including:
a second receiver, configured to receive a target reference signal,
where the first reference signal resource set includes K1 reference signal resources, K1 being a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
   - a same subchannel;
   - a bandwidth corresponding to a same PRB;
   - a same BWP;
   - a same number of consecutive multi-carrier symbols; and
   - a same slot.

This application discloses a third node for wireless communication, including:
a third transmitter, configured to transmit a first information block, the first information block being used for determining a first reference signal resource set;
a third receiver, configured to receive location information;
where the first reference signal resource set includes K1 reference signal resources, K1 being a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; measurement performed by a recipient of the target reference signal on the target reference signal is used for generating the location information, and the recipient of the target reference signal transmits the location information; and a definition of the given resource unit includes at least one of the following:
   - a same subchannel;
   - a bandwidth corresponding to a same PRB;
   - a same BWP;
   - a same number of consecutive multi-carrier symbols; and
   - a same slot.

As an embodiment, the solution in this application has the following benefit: the transmission of a positioning reference signal of an SL is optimized to improve performance.

### BRIEF DESCRIPTION OF THE DRAWINGS

Other features, objectives, and advantages of this application will become more obvious by reading detailed descriptions of non-restrictive embodiments with reference to the following accompanying drawings.
FIG. 1 shows a processing flowchart of a first node according to an embodiment of this application;
FIG. 2 shows a schematic diagram of a network architecture according to an embodiment of this application;
FIG. 3 shows a schematic diagram of an embodiment of a radio protocol architecture for a user plane and control plane according to an embodiment of this application;
FIG. 4 shows a schematic diagram of a first communication device and a second communication device according to an embodiment of this application;
FIG. 5 shows a structural diagram of UE positioning according to an embodiment of this application;
FIG. 6 shows a flowchart of a target reference signal according to an embodiment of this application;
FIG. 7 shows a flowchart of a target reference signal according to another embodiment of this application;
FIG. 8 shows a flowchart of determining whether to transmit a target reference signal according to an embodiment of this application;
FIG. 9 shows a schematic diagram of a first node, a second node, and a third node according to this application;
FIG. 10 shows a schematic diagram of a first reference signal resource and a second reference signal resource according to an embodiment of this application;
FIG. 11 shows a schematic diagram of M1 candidate reference signal resources according to an embodiment of this application;
FIG. 12 shows a structural block diagram of a processing apparatus used in a first node according to an embodiment of this application;
FIG. 13 shows a structural block diagram of a processing apparatus used in a second node according to an embodiment of this application; and
FIG. 14 shows a structural block diagram of a processing apparatus used in a third node according to an embodiment of this application.

### DETAILED DESCRIPTION

The technical solution of this application will be described in detail below in conjunction with the drawings. It should be noted that without conflict, the embodiments and the features of the embodiments can be arbitrarily combined with each other.

### Embodiment 1

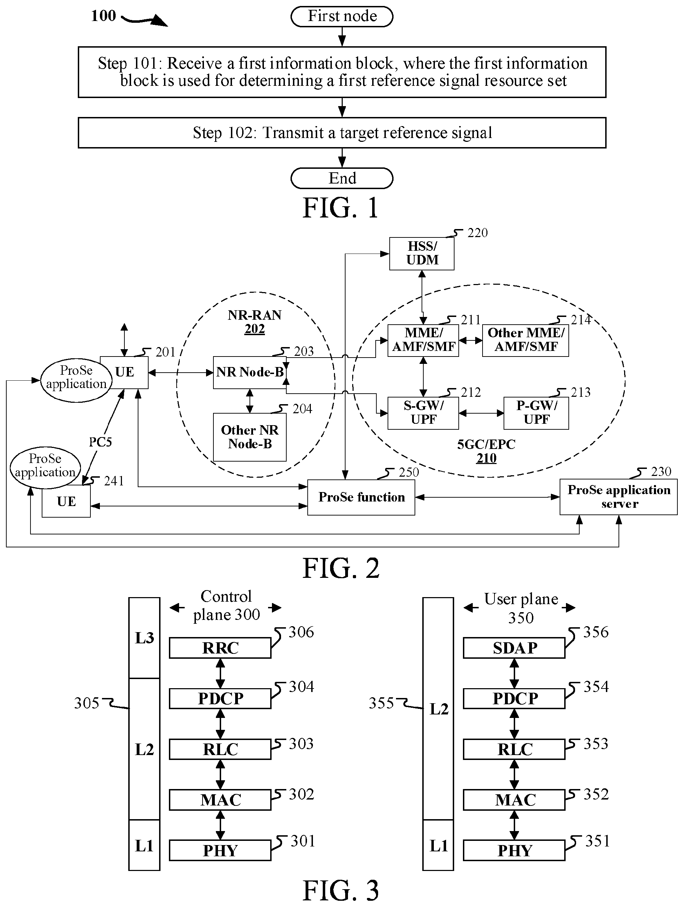

Embodiment 1 illustrates a processing flowchart of a first node, as shown in FIG. 1. In 100 shown in FIG. 1, each block represents one step. In Embodiment 1, the first node in this application receives a first information block in step 101, where the first information block is used for determining a first reference signal resource set; and a target reference signal is transmitted at step 102.

In Embodiment 1, the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
- a same subchannel;
- a bandwidth corresponding to a same PRB;
- a same BWP;
- a same number of consecutive multi-carrier symbols; and
- a same slot.

As an embodiment, the first information block includes all or part of RRC (Radio Resource Control) signaling.

As an embodiment, the first information block includes an RRC IE (Radio Resource Control Information Element).

As an embodiment, the first information block includes all or part of MAC (Multimedia Access Control) signaling.

As an embodiment, the first information block includes an MAC CE (Control Element).

As an embodiment, the first information block includes multiple pieces of RRC signaling.

As an embodiment, the first information block includes multiple RRC IEs.

As an embodiment, the first information block includes multiple pieces of MAC signaling.

As an embodiment, the first information block includes multiple MAC CEs.

As an embodiment, the first information block is transmitted via RRC signaling.

As an embodiment, the first information block is transmitted via MAC signaling.

As an embodiment, the first information block is transmitted via higher layer signaling.

As an embodiment, the first information block is used for indicating time-domain resources occupied by any reference signal resource in the first reference signal resource set.

As an embodiment, the first information block is used for indicating frequency-domain resources occupied by any reference signal resource in the first reference signal resource set.

As an embodiment, the first information block is used for indicating REs (Resource Elements) occupied by any reference signal resource in the first reference signal resource set.

As an embodiment, K1 is equal to 1.

As an embodiment, the first information block is used for indicating time-domain resources occupied by any one of the K1 reference signal resources.

As an embodiment, the first information block is used for indicating frequency-domain resources occupied by any one of the K1 reference signal resources.

As an embodiment, the first information block is used for indicating REs occupied by any one of the K1 reference signal resources.

As an embodiment, the first information block is used for determining a comb size used by any one of the K1 reference signal resources.

As an embodiment, the first information block is used for determining a pattern used by any one of the K1 reference signal resources.

As an embodiment, the first information block is used for determining an ID corresponding to the first reference signal resource set.

As an embodiment, the first information block is used for determining a periodicity used by the first reference signal resource set.

As an embodiment, the first information block is used for determining a slot offset used by the first reference signal resource set.

As an embodiment, the first information block is used for determining a repetition factor used by the first reference signal resource set.

As an embodiment, the first information block is used for determining a time gap used by the first reference signal resource set.

As an embodiment, the first information block is used for determining the number of symbols occupied by the first reference signal resource set.

As an embodiment, the first information block is used for determining Muting configuration used by the first reference signal resource set.

As an embodiment, the first information block is used for determining a Muting pattern used by the first reference signal resource set.

As an embodiment, the first information block is used for determining a ResourceID corresponding to any one of the K1 reference signal resources.

As an embodiment, the first information block is used for determining a SequenceID corresponding to any one of the K1 reference signal resources.

As an embodiment, the first information block is used for determining a CombSize used by any one of the K1 reference signal resources.

As an embodiment, the first information block is used for determining a ReOffset used by any one of the K1 reference signal resources.

As an embodiment, the first information block is used for determining a SlotOffset used by any one of the K1 reference signal resources.

As an embodiment, the first information block is used for determining a SymbolOffset used by any one of the K1 reference signal resources.

As an embodiment, the first information block is used for determining QCL-Info corresponding to any one of the K1 reference signal resources.

As an embodiment, the first reference signal resource set corresponds to one PRS resource set.

As an embodiment, the first reference signal resource set belongs to one sidelink resource pool.

As an embodiment, the first reference signal resource set is used for sidelink transmission.

As an embodiment, the first reference signal resource set is used for sidelink communication.

As an embodiment, the first reference signal resource set is used for sidelink positioning.

As an embodiment, the first reference signal resource set is used for SL PRS transmission.

As an embodiment, the first reference signal resource set is dedicated for SL PRS transmission.

As an embodiment, the first reference signal resource set is configured with an LMF (Location Management Function).

As an embodiment, the first reference signal resource set is configured with gNB (g-Node-B).

As an embodiment, the name of the first information block includes an SL.

As an embodiment, the name of the first information block includes a PRS.

As an embodiment, the name of the first information block includes Info.

As an embodiment, the name of the first information block includes positioning.

As an embodiment, the target reference signal includes a PRS.

As an embodiment, the target reference signal includes an SL PRS.

As an embodiment, the target reference signal includes a CSI-RS (Channel State Information Reference Signal).

As an embodiment, the target reference signal includes an SL CSI-RS.

As an embodiment, the target reference signal includes an SRS (Sounding Reference Signal).

As an embodiment, the target reference signal includes an SL SRS.

As an embodiment, the target reference signal is used for generating location information.

As an embodiment, the target reference signal is used for positioning.

As an embodiment, the target reference signal is used for sidelink positioning.

As an embodiment, the target reference signal is used for obtaining an Rx-Tx time difference.

As an embodiment, the target reference signal is used for obtaining a sidelink Rx-Tx time difference.

As an embodiment, the target reference signal is used for obtaining a UE Rx-Tx time difference.

As an embodiment, the target reference signal is used for obtaining receive timing of the target reference signal.

As an embodiment, the target reference signal is used by a recipient of the target reference signal to determine receive timing of a sub-frame.

As an embodiment, the target reference signal is used by a recipient of the target reference signal to determine receive timing of a slot.

As an embodiment, the target reference signal is used for positioning measurement.

As an embodiment, the target reference signal is used for sidelink positioning measurement.

As an embodiment, the target reference signal is used for obtaining AoA (Angle-of-Arrival).

As an embodiment, the target reference signal is used for obtaining RSRP (Reference Signal Received Power).

As an embodiment, the target reference signal is used for obtaining RSRPP (Reference Signal Received Path Power).

As an embodiment, the target reference signal is used for obtaining RSTD (Reference Signal Time Difference).

As an embodiment, the target reference signal is used for obtaining RTOA (Relative Time of Arrival).

As an embodiment, the target reference signal is used for obtaining SL-RTOA.

As an embodiment, the target reference signal is used for RTT positioning.

As an embodiment, the target reference signal is used for single-sided RTT positioning.

As an embodiment, the target reference signal is used for double-sided RTT positioning.

As an embodiment, the target reference signal is used for obtaining location information.

As an embodiment, the target reference signal is configured with one LMF.

As an embodiment, the first reference signal resource and the second reference signal resource correspond to two ResourceIDs, respectively.

As a sub-embodiment of this embodiment, the two ResourceIDs are different.

As a sub-embodiment of this embodiment, the two ResourceIDs are associated.

As a sub-embodiment of this embodiment, the two ResourceIDs are the same.

As an embodiment, the first reference signal resource and the second reference signal resource correspond to two different CombSizes, respectively.

As an embodiment, the first reference signal resource and the second reference signal resource correspond to two different ReOffsets, respectively.

As an embodiment, the first reference signal resource and the second reference signal resource correspond to two different frequency-domain densities, respectively.

As an embodiment, the first reference signal resource and the second reference signal resource correspond to two different time-domain densities, respectively.

As an embodiment, the given resource unit corresponds to a same subchannel in frequency domain.

As an embodiment, the given resource unit corresponds to a bandwidth corresponding to a same PRB in frequency domain.

As an embodiment, the given resource unit corresponds to a same BWP in frequency domain.

As an embodiment, the given resource unit corresponds to a same number of consecutive OFDM symbols in time domain.

As an embodiment, the given resource unit corresponds to a same slot in time domain.

As an embodiment, the given resource unit is a same subchannel and a same number of consecutive OFDM symbols.

As an embodiment, the given resource unit is a same subchannel and a same slot.

As an embodiment, the given resource unit is a bandwidth corresponding to a same PRB and a same number of consecutive OFDM symbols.

As an embodiment, the given resource unit is a bandwidth corresponding to a same PRB and a same slot.

As an embodiment, the given resource unit is a same BWP and a same number of consecutive OFDM symbols.

As an embodiment, the given resource unit is a same BWP and a same slot.

As an embodiment, the sub-signal occupies, in frequency-domain, a frequency bandwidth corresponding to a positive integer number of PRBs.

As a sub-embodiment of this embodiment, the positive integer number of PRBs are consecutive in frequency domain.

As an embodiment, the sub-signal occupies, in frequency domain, the number of subcarriers corresponding to a positive integer number of PRBs.

As an embodiment, in the given resource unit, the number of REs occupied by the first reference signal resource is L1 times of the number of REs occupied by the second reference signal resource, where L1 is a positive integer greater than 1.

As a sub-embodiment of this embodiment, L1 is equal to 2.

As a sub-embodiment of this embodiment, L1 is equal to 4.

As a sub-embodiment of this embodiment, L1 is equal to 8.

As a sub-embodiment of this embodiment, L1 is equal to 16.

As a sub-embodiment of this embodiment, L1 is one of 2, 4, 8, or 16.

As an embodiment, the target reference signal is measured to obtain location information.

As an embodiment, the target reference signal is used for generating location information.

As an embodiment, the location information is reported to one LMF.

As an embodiment, the location information is transmitted to the first node.

As an embodiment, the location information is reported to one LMF via the first node.

As an embodiment, the location information is transmitted to the second node in this application.

As an embodiment, the location information is reported to one LMF via the second node in this application.

As an embodiment, the location information is used for determining an RTT.

As an embodiment, the location information is used by one LMF to determine RTT.

As an embodiment, the location information is used for positioning.

As an embodiment, the location information is used for location related measurement.

As an embodiment, the location information is used for sidelink positioning.

As an embodiment, the location information is used for determining a propagation delay.

As an embodiment, the location information is used by the LMF to determine a propagation delay.

As an embodiment, the location information is used for RTT positioning.

As an embodiment, the location information is used for single-sided RTT positioning.

As an embodiment, the location information is used for double-sided RTT positioning.

As an embodiment, the location information is used for multi-RTT (Multiple-Round Trip Time) positioning.

As an embodiment, the location information includes a first Rx-Tx time difference.

As an embodiment, the location information includes location related measurements.

As an embodiment, the location information includes a location estimate.

As an embodiment, the location information includes positioning assistance data.

As an embodiment, the location information includes TimingQuality.

As an embodiment, the location information includes RxBeamIndex.

As an embodiment, the location information includes received power information.

As an embodiment, the location information is used for transferring NAS (Non-Access-Stratum) specific information.

As an embodiment, the location information is used for transferring timing information of a clock.

As an embodiment, the received power information includes RSRP (Reference Signal Received Power) of the target reference signal.

As an embodiment, the received power information includes a RSRPP (Reference Signal Received Path Power) of the target reference signal.

As an embodiment, the received power information includes RSRP-ResultDiff.

As an embodiment, the unit of the received power information is dBm (decibel-milliwatt).

As an embodiment, the unit of the received power information is dB (decibel).

As an embodiment, the location information includes an RSTD (Reference Signal Time Difference).

As an embodiment, the location information includes a sidelink Rx-Tx time difference.

As an embodiment, the location information includes a UE Rx-Tx time difference.

As an embodiment, the location information includes RxTxTimeDiff (Rx-Tx Time Difference).

As an embodiment, the location information includes SL-RxTxTimeDiff (Sidelink Rx-Tx Time Difference).

As an embodiment, the location information includes RTOA (Relative Time of Arrival).

As an embodiment, the location information includes SL-RTOA.

As an embodiment, the multi-carrier symbol in this application is an OFDM (Orthogonal Frequency Division Multiplexing) symbol.

As an embodiment, the multi-carrier symbol in this application is an SC-FDMA (Single-Carrier Frequency Division Multiple Access) symbol.

As an embodiment, the multi-carrier symbol in this application is a DFT-S-OFDM (Discrete Fourier Transform Spread Orthogonal Frequency Division Multiplexing) symbol.

As an embodiment, the multi-carrier symbol in this application is an IFDMA (Interleaved Frequency Division Multiple Access) symbol.

### Embodiment 2

Embodiment 2 illustrates a schematic diagram of a network architecture according to an embodiment of this application, as shown in FIG. 2. FIG. 2 illustrates a V2X communication architecture under 5G NR (New Radio), LTE (Long-Term Evolution), and LTE-A (Long-Term Evolution Advanced) system architectures. The 5G NR or LTE network architecture may be referred to as 5GS (5GSystem)/EPS (Evolved Packet System) or some other suitable term.

The V2X communication architecture in Embodiment 2 includes UE (User Equipment) 201, UE241, an NG-RAN (Next Generation Radio Access Network) 202, a 5GC (5G Core Network)/EPC (Evolved Packet Core) 210, an HSS (Home Subscriber Server)/UDM (Unified Data Management) 220, a ProSe function 250, and a ProSe application server 230. The V2X communication architecture can be interconnected to other access networks, but these entities/interfaces are not shown for simplicity. As shown, the V2X communication architecture provides a packet-switching service. However, those skilled in the art will easily understand that various concepts presented throughout this application can be extended to a network providing a circuit-switching service or other cellular networks. The NG-RAN includes an NR Node-B (gNB) 203 and other gNB204. The gNB203 provides user and control plane protocol termination towards the UE201. The gNB203 may be connected to other gNB204 via an Xn interface (e.g., a backhaul). The gNB203 may also be referred to as a base station, a base transceiver station, a radio base station, a radio transceiver, a transceiver function, a basic service set (BSS), an extended service set (ESS), TRP (Transmitter Receiver Point), or some other suitable term. The gNB203 provides an access point to 5GC/EPC210 for the UE201. Examples of the UE201 include a cellular phone, a smartphone, a session initiation protocol (SIP) phone, a laptop computer, a personal digital assistant (PDA), a satellite radio, non-ground base station communications, satellite mobile communications, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, a means of land transportation, an automobile, a wearable device, or any other similar functional apparatus. Those skilled in the art may also refer the UE201 as a mobile station, a subscriber station, a mobile unit, a subscriber unit, a radio unit, a remote unit, a mobile apparatus, a radio apparatus, a wireless communications apparatus, a remote apparatus, a mobile subscriber station, an access terminal, a mobile terminal, a radio terminal, a remote terminal, a handset, a user agent, a mobile client, a client, or some other suitable term. The gNB203 is connected to the 5GC/EPC210 through an S1/NG interface. The 5GC/EPC210 includes an MME (Mobility Management Entity)/AMF (Authentication Management Field)/SMF (Session Management Function) 211, other MME/AMF/SMF214, an S-GW (Service Gateway)/UPF (UserPlaneFunction) 212, and P-GW (Packet Date Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transported by the S-GWIUPF212, and the S-GW/UPF212 itself is connected to the P-GW/UPF213. The P-GW provides UE IP address assignment and other functions. The P-GW/UPF213 is connected to an Internet service 230. The Internet service 230 includes Internet protocol services corresponding to an operator, which may specifically include Internet, Intranet, IMS (IP Multimedia Subsystem) and packet-switching streaming services. The ProSe function 250 is a logical function used for network-related behaviors required by a proximity-based service (ProSe). The functions include a DPF (Direct Provisioning Function), a direct discovery name management function, an EPC-level discovery ProSe function, and the like. The ProSe application server 230 has functions, such as storing an EPC ProSe user identifier, mapping between an application layer user identifier and the EPC ProSe user identifier, and allocating a code suffix pool limited by ProSe.

As an embodiment, the UE201 and the UE241 are connected by a PC5 reference point.

As an embodiment, the ProSe function 250 is connected to the UE201 and the UE241 by a PC3 reference point.

As an embodiment, the ProSe function 250 is connected to the ProSe application server 230 by a PC2 reference point.

As an embodiment, the ProSe application server 230 is connected to the ProSe application of the UE201 and the ProSe application of the UE241 by a PC1 reference point.

As an embodiment, the first node in this application is the UE201, and the second node in this application is the UE241.

As an embodiment, the first node in this application is the UE241, and the second node in this application is the UE201.

As an embodiment, a radio link between the UE201 and the UE241 corresponds to a sidelink (SL) in this application.

As an embodiment, the gNB203 corresponds to the third node in this application.

As an embodiment, the ProSe function 250 corresponds to the third node in this application.

As an embodiment, the ProSe application server 230 corresponds to the third node in this application.

As an embodiment, the third node includes a location service centre.

As an embodiment, the third node includes a base station.

As an embodiment, the location service centre is an NAS (Non-Access-Stratum) device.

As an embodiment, the location service centre includes an LMF.

As an embodiment, a radio link from the UE201 to the NR Node-B is an uplink.

As an embodiment, a radio link from the NR Node-B to the UE201 is a downlink.

As an embodiment, the UE201 supports V2X transmission.

As an embodiment, the UE241 supports V2X transmission.

As an embodiment, the NR Node-B 203 is a macrocellular base station.

As an embodiment, the NR Node-B 203 is a micro cell base station.

As an embodiment, the NR Node-B 203 is a picocell base station.

As an embodiment, the NR Node-B 203 is a Femtocell.

As an embodiment, the NR Node-B 203 is a base station device that supports a large delay difference.

As an embodiment, the NR Node-B 203 is an RSU (Road Side Unit).

As an embodiment, the NR Node-B 203 includes a satellite device.

### Embodiment 3

Embodiment 3 shows a schematic diagram of an embodiment of a radio protocol architecture for a user plane and a control plane according to this application, as shown in FIG. 3. FIG. 3 is a schematic diagram illustrating an embodiment of a radio protocol architecture used for a user plane 350 and a control plane 300. FIG. 3 illustrates a radio protocol architecture used for a control plane 300 between a first communication node device (UE, a gNB, or an RSU in V2X) and a second communication node device (a gNB, UE, or an RSU in V2X) with three layers: layer 1, layer 2, and layer 3. The layer 1 (L1 layer) is a lowest layer and implements various PHY (physical layer) signal processing functions. The L1 layer will be referred to as PHY301 herein. The layer 2 (L2 layer) 305 is above the PHY301, and is responsible for a link between the first communication node device and the second communication node device through the PHY301. The L2 layer 305 includes an MAC (Media Access Control) sublayer 302, an RLC (Radio Link Control) sublayer 303, and a PDCP (Packet Data Convergence Protocol) sublayer 304, and these sublayers are terminated at the second communication node device. The PDCP sublayer 304 provides multiplexing between different radio bearers and logical channels. The PDCP sublayer 304 further provides security by encrypting a data packet, and the PDCP sublayer 304 further provides cross-zone mobile support to the second communication node device from the first communication node device. The RLC sublayer 303 provides segmentation and reassembly of an upper-layer data packet, retransmission of a lost data packet, and reordering of a data packet to compensate for out-of-order reception caused by HARQ. The MAC sublayer 302 provides multiplexing between a logical channel and a transport channel. The MAC sublayer 302 is further responsible for allocating various radio resources (for example, resource blocks) in one cell between the first communication node devices. The MAC sublayer 302 is further responsible for a HARQ operation. An RRC (Radio Resource Control) sublayer 306 in the layer 3 (L3 layer) in the control plane 300 is responsible for obtaining a radio resource (i.e., a radio bearer) and configuring a lower layer by using RRC signaling between the second communication node device and the first communication node device. The radio protocol architecture of the user plane 350 includes the layer 1 (L1 layer) and the layer 2 (L2 layer). The radio protocol architecture used for the first communication node device and the second communication node device in the user plane 350 is substantially the same for a physical layer 351, a PDCP sublayer 354 in the L2 layer 355, an RLC sublayer 353 in the L2 layer 355, and an MAC sublayer 352 in the L2 layer 355 as that for corresponding layers and sublayers in the control plane 300, but the PDCP sublayer 354 further provides header compression for an upper-layer data packet to reduce radio transmission overheads. The L2 layer 355 in the user plane 350 further includes an SDAP (Service Data Adaptation Protocol) sublayer 356. The SDAP sublayer 356 is responsible for mapping between a QoS stream and a data radio bearer (DRB) to support diversity of services. Although not shown, the first communication node device may have several upper layers above the L2 layer 355, including a network layer (for example, an IP layer) terminated at a P-GW on a network side and an application layer terminated at another end (for example, remote UE, a server, and the like) of a connection.

As an embodiment, the radio protocol architecture in FIG. 3 is applicable to the first node in this application.

As an embodiment, the radio protocol architecture in FIG. 3 is applicable to the second node in this application.

As an embodiment, PDCP304 of the second communication node device is configured to generate a schedule for the first communication node device.

As an embodiment, PDCP354 of the second communication node device is configured to generate a schedule for the first communication node device.

As an embodiment, the first information block is generated from the RRC306.

As an embodiment, the first information block is generated above the RRC306.

As an embodiment, the first information block is generated on an NAS layer.

As an embodiment, the target reference signal is generated on the PHY301 or the PHY351.

As an embodiment, measurement performed on the M1 candidate reference signal resources in this application includes layer 3 filtering performed on the RRC sublayer 306.

As an embodiment, measurement performed on the M1 candidate reference signal resources in this application is performed at the PHY301 or the PHY351.

As an embodiment, the location information is generated on the RRC306.

As an embodiment, the location information is generated on an NAS layer.

As an embodiment, the first node is a terminal.

As an embodiment, the first node is a relay.

As an embodiment, the first node is a means of transportation.

As an embodiment, the second node is a terminal.

As an embodiment, the second node is a relay.

As an embodiment, the second node is a means of transportation.

As an embodiment, the third node is a gNB.

As an embodiment, the third node is a transmitter receiver point (TRP).

As an embodiment, the third node is configured to manage multiple TRPs.

As an embodiment, the third node is a node configured to manage multiple cells.

As an embodiment, the third node is a node configured to manage multiple serving cells.

As an embodiment, the third node is an LMF.

As an embodiment, the third node is a location service centre.

As an embodiment, the third node corresponds to the network device in this application.

### Embodiment 4

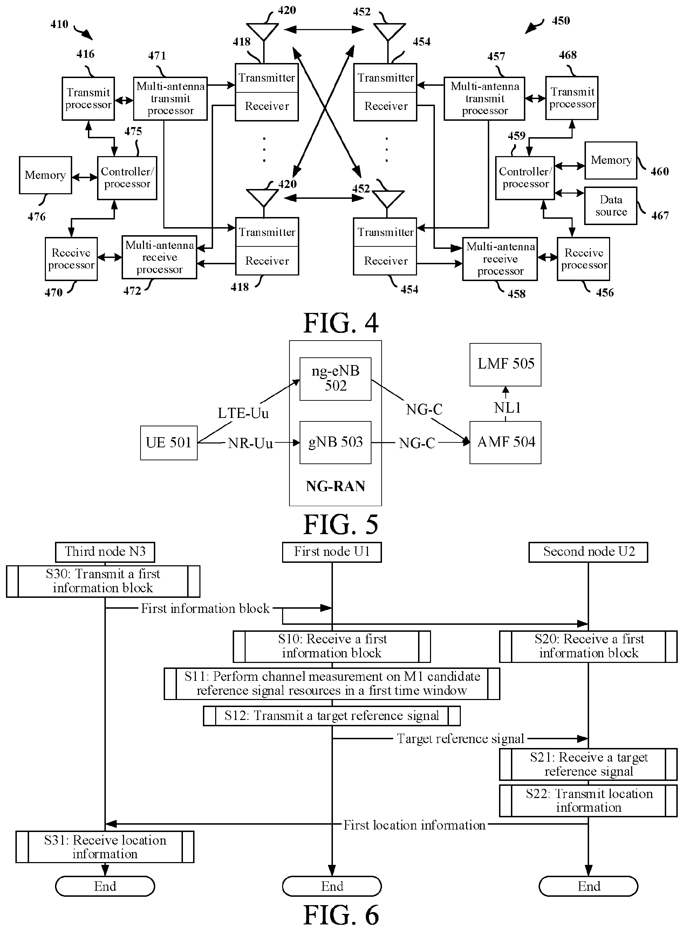

Embodiment 4 shows a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper-layer data packet from a core network is provided to the controller/processor 475. The controller/processor 475 implements the functionality of an L2 layer. During transmission from the second communication device 410 to the first communication device 450, the controller/processor 475 provides header compression, encryption, packet segmentation and reordering, multiplexing between a logical channel and a transport channel, and radio resource allocation to the first communication device 450 based on various priority measures. The controller/processor 475 is further responsible for retransmission of a lost packet, and signaling to the first communication device 450. The transmit processor 416 and the multi-antenna transmit processor 471 implement various signal processing functions used for an L1 layer (i.e., a physical layer). The transmit processor 416 implements coding and interleaving to facilitate forward error correction (FEC) at the second communication device 410, and mapping of a signal cluster based on various modulation solutions (for example, binary phase shift keying (BPSK), quadrature phase shift keying (QPSK), M phase shift keying (M-PSK), and M quadrature amplitude modulation (M-QAM)). The multi-antenna transmit processor 471 performs digital spatial precoding, including codebook-based precoding and non-codebook-based precoding, and beam forming processing, on a coded and modulated symbol to generate one or more spatial streams. The transmit processor 416 then maps each spatial stream to a subcarrier, and multiplexes the spatial stream with a reference signal (for example, a pilot frequency) in time domain and/or frequency domain, and then uses inverse fast Fourier transform (IFFT) to generate a physical channel carrying a time-domain multi-carrier symbol stream. The multi-antenna transmit processor 471 then performs transmission of an analog precoding/beam forming operation on the time-domain multi-carrier symbol stream. Each transmitter 418 converts a baseband multi-carrier symbol stream provided by the multi-antenna transmit processor 471 into a radio-frequency stream, and then provides the radio-frequency stream to different antennas 420.

During transmission from the second communication device 410 to the first communication device 450, at the first communication device 450, each receiver 454 receives a signal through its corresponding antenna 452. Each receiver 454 recovers information modulated onto a radio-frequency carrier, converts the radio-frequency stream into a baseband multi-carrier symbol stream, and provides the baseband multi-carrier symbol stream to the receive processor 456. The receive processor 456 and the multi-antenna receive processor 458 implement various signal processing functions of the L1 layer. The multi-antenna receive processor 458 performs reception of an analog precoding/beam forming operation on the baseband multi-carrier symbol stream from the receiver 454. The receive processor 456 uses fast Fourier transform (FFT) to convert the baseband multi-carrier symbol stream on which the analog precoding/beam forming operation has been received, from time domain to frequency domain. In frequency domain, a data signal and reference signal on the physical layer are demultiplexed by the receive processor 456, where the reference signal is used for channel estimate, and after multi-antenna detection is performed on the data signal in the multi-antenna receive processor 458, any spatial stream that uses the first communication device 450 as a destination is restored. A symbol in each spatial stream is demodulated and recovered in the receive processor 456, and a soft decision is generated. The receive processor 456 then decodes and deinterleaves the soft decision to recover upper-layer data and control signal that are transmitted by the second communication device 410 on the physical channel. The upper-layer data and the control signal are then provided to the controller/processor 459. The controller/processor 459 implements a function of the L2 layer. The controller/processor 459 may be associated with the memory 460 that stores program codes and data. The memory 460 may be referred to as a computer-readable medium. During transmission from the second communication device 410 to the second communication device 450, the controller/processor 459 provides demultiplexing between a transport channel and a logical channel, packet reassembly, decryption, header decompression, and control signal processing to recover the upper layer data packet from the core network. The upper-layer data packet is then provided to all protocol layers above the L2 layer. Various control signals can also be provided to L3 for L3 processing.

During transmission from the first communication device 450 to the second communication device 410, at the first communication device 450, a data source 467 is used for providing the upper-layer data packet to the controller/processor 459. The data source 467 represents all protocol layers above the L2 layer. Similar to a transmit function at the second communication device 410 that is described in transmission from the second communication device 410 to the first communication device 450, the controller/processor 459 implements header compression, encryption, packet segmentation and reordering, and multiplexing between the logical channel and the transport channel based on radio resource allocation, and implements the function of the L2 layer for a user plane and a control plane. The controller/processor 459 is further responsible for retransmission of a lost packet, and signaling to the second communication device 410. The transmit processor 468 performs modulation mapping and channel coding. The multi-antenna transmit processor 457 performs digital multi-antenna spatial precoding, including codebook-based precoding and non-codebook-based precoding, and beam forming processing. The transmit processor 468 then modulates a generated spatial stream into a multi-carrier/single-carrier symbol stream, and after undergoing the analog precoding/beam forming operation in the multi-antenna transmit processor 457, the multi-carrier/single-carrier symbol stream is provided to different antennas 452 via a transmitter 454. Each transmitter 454 first converts a baseband symbol stream provided by the multi-antenna transmit processor 457 into a radio-frequency symbol stream, and then provides the radio-frequency symbol stream to the antenna 452.

During transmission from the first communication device 450 to the second communication device 410, a function at the second communication device 410 is similar to a receive function at the first communication device 450 that is described in transmission from the second communication device 410 to the first communication device 450. Each receiver 418 receives a radio-frequency signal through its corresponding antenna 420, converts the received radio-frequency signal into a baseband signal, and provides the baseband signal to the multi-antenna receive processor 472 and the receive processor 470. The receive processor 470 and the multi-antenna receive processor 472 jointly implement a function of the L1 layer. The controller/processor 475 implements the function of the L2 layer. The controller/processor 475 may be associated with the memory 476 that stores program codes and data. The memory 476 may be referred to as a computer-readable medium. During transmission from the first communication device 450 to the second communication device 410, the controller/processor 475 provides demultiplexing between a transport channel and a logical channel, packet reassembly, decryption, header decompression, and control signal processing to recover the upper layer data packet from UE450. The upper layer data packet from the controller/processor 475 may be provided to the core network.

As an embodiment, the first communication device 450 apparatus includes: at least one processor and at least one memory, where the at least one memory includes computer program codes; the at least one memory and the computer program code are configured to be used together with the at least one processor, where the first communication device 450 apparatus at least: first receives a first information block, where the first information block is used for determining a first reference signal resource set; and then transmits a target reference signal. The first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of {a same subchannel, a same bandwidth corresponding to a same PRB, a same BWP, a same number of consecutive multi-carrier symbols, and a same slot}.

As an embodiment, the first communication device 450 includes: a memory storing a computer-readable instruction program which, when executed by at least one processor, generates actions including: first receiving a first information block, where the first information block is used for determining a first reference signal resource set; and then transmitting a target reference signal. The first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of {a same subchannel, a same bandwidth corresponding to a same PRB, a same BWP, a same number of consecutive multi-carrier symbols, and a same slot}.

As an embodiment, the second communication device 410 apparatus includes: at least one processor and at least one memory, where the at least one memory includes computer program codes; the at least one memory and the computer program code are configured to be used together with the at least one processor. The second communication device 410 apparatus at least: receives a target reference signal. The first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of {a same subchannel, a same bandwidth corresponding to a same PRB, a same BWP, a same number of consecutive multi-carrier symbols, and a same slot}.

As an embodiment, the second communication device 410 apparatus includes: a memory storing a computer-readable instruction program which, when executed by at least one processor, generates actions including: receiving a target reference signal. The first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of {a same subchannel, a same bandwidth corresponding to a same PRB, a same BWP, a same number of consecutive multi-carrier symbols, and a same slot}.

As an embodiment, the second communication device 410 apparatus includes: at least one processor and at least one memory, where the at least one memory includes computer program codes; the at least one memory and the computer program code are configured to be used together with the at least one processor. The second communication device 410 apparatus at least: first transmits a first information block, where the first information block is used for determining a first reference signal resource set; and then receives location information. The first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; measurement performed by a recipient of the target reference signal on the target reference signal is used for generating the location information, and the recipient of the target reference signal transmits the location information; and a definition of the given resource unit includes at least one of {a same subchannel, a same bandwidth corresponding to a same PRB, a same BWP, a same number of consecutive multi-carrier symbols, and a same slot}.

As an embodiment, the second communication device 410 apparatus includes: a memory storing a computer-readable instruction program which, when executed by at least one processor, generates actions including: first transmitting a first information block, where the first information block is used for determining a first reference signal resource set; and then receiving location information; the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; measurement performed by a recipient of the target reference signal on the target reference signal is used for generating the location information, and the recipient of the target reference signal transmits the location information; and a definition of the given resource unit includes at least one of {a same subchannel, a same bandwidth corresponding to a same PRB, a same BWP, a same number of consecutive multi-carrier symbols, and a same slot}.

As an embodiment, the first communication device 450 corresponds to the first node in this application.

As an embodiment, the second communication device 410 corresponds to the first node in this application.

As an embodiment, the second communication device 410 corresponds to the second node in this application.

As an embodiment, the second communication device 410 corresponds to the third node in this application.

As an embodiment, the first communication device 450 is a piece of UE.

As an embodiment, the first communication device 450 is a terminal.

As an embodiment, the first communication device 450 is a relay.

As an embodiment, the first communication device 450 is a terminal having positioning capability.

As an embodiment, the second communication device 410 is a piece of UE.

As an embodiment, the second communication device 410 is a terminal.

As an embodiment, the second communication device 410 is a relay.

As an embodiment, the second communication device 410 is a terminal having positioning capability.

As an embodiment, the second communication device 410 is a base station.

As an embodiment, the second communication device 410 is a relay.

As an embodiment, the second communication device 410 is a network device.

As an embodiment, the second communication device 410 is a serving cell.

As an embodiment, the second communication device 410 is a TRP.

As an embodiment, the second communication device 410 is a base station having positioning capability.

As an embodiment, the second communication device 410 is an LMF.

As an embodiment, the second communication device 410 is a location service centre.

As an embodiment, at least the first four of the antenna 452, the receiver 454, the multi-antenna receive processor 458, the receive processor 456, and the controller/processor 459 are configured to receive the first information block; and at least the first four of the antenna 420, the transmitter 418, the multi-antenna transmit processor 471, the transmit processor 416, and the controller/processor 475 are configured to transmit the first information block.

As an embodiment, at least the first four of the antenna 452, the transmitter 454, the multi-antenna transmit processor 457, the transmit processor 468, and the controller/processor 459 are configured to transmit the target reference signal; and at least the first four of the antenna 420, the receiver 418, the multi-antenna receive processor 472, the receive processor 470, and the controller/processor 475 are configured to receive the target reference signal.

As an embodiment, at least the first four of the antenna 452, the receiver 454, the multi-antenna receive processor 458, the receive processor 456, and the controller/processor 459 are configured to perform channel measurement on M1 candidate reference signal resources in a first time window.

As an embodiment, at least the first four of the antenna 452, the transmitter 454, the multi-antenna transmit processor 457, the transmit processor 468, and the controller/processor 459 are configured to transmit the location information; and at least the first four of the antenna 420, the receiver 418, the multi-antenna receive processor 472, the receive processor 470, and the controller/processor 475 are configured to receive the location information.

### Embodiment 5

Embodiment 5 illustrates a structural diagram of UE positioning according to an embodiment of this application, as shown in FIG. 5.

UE501 communicates with ng-eNB502 or gNB503 via an LTE (Long Term Evolution)-Uu interface or an NR (New Radio)-Uu new radio interface. The ng-eNB502 and the gNB 503 are sometimes referred to as a base station, and the ng-eNB502 and the gNB 503 are also referred to as NG (Next Generation)-RAN (Radio Access Network). The ng-eNB502 and the gNB 503 are each connected to an AMF (Authentication Management Field) 504 through an NG (Next Generation)-C (Control plane). The AMF504 is connected to an LMF (Location Management Function) 505 through an NL1 interface.

The AMF504 receives a location service request associated with particular UE from another entity, for example, a GMLC (Gateway Mobile Location Centre) or UE, or the AMF504 decides on its own to start a location service associated with the particular UE. Then, the AMF504 transmits the location service request to one LMF, for example, the LMF505. Then, this LMF processes the location service request, including transmitting assistance data to the particular UE to assist UE-based or UE-assisted positioning, and receiving reported location information from the UE. Subsequently, this LMF returns a result of the location service to the AMF504. If the location service is requested by another entity, the AMF504 returns the result of the location service to that entity.

As an embodiment, the network device in this application includes an LMF.

As an embodiment, the network device in this application includes an NG-RAN and an LMF.

As an embodiment, the network device in this application includes an NG-RAN, an AMF, and an LMF.

### Embodiment 6

Embodiment 6 illustrates a flowchart of a target reference signal, as shown in FIG. 6. In FIG. 6, a first node U1, a second node U2, and a third node N3 communicate with each other via a radio link. It should be particularly noted that the order in this embodiment does not limit a signal transmission order and an implementation order in this application. Without conflict, the embodiments, sub-embodiments, and subsidiary embodiments in Embodiment 6 can be applied to the embodiments, sub-embodiments, and subsidiary embodiments in Embodiments 7 and 8 in this application. On the contrary, without conflict, the embodiments, sub-embodiments, and subsidiary embodiments in Embodiments 7 and 8 in this application can be applied to Embodiment 6.

For the **first node U1,** a first information block is received in step S10; channel measurement is performed on M1 candidate reference signal resources in a first time window in step S11; and a target reference signal is sent in step S12.

For the **second node U2,** a first information block is received in step S20; a target reference signal is received in step S21; and location information is transmitted in step S22.

For the **third node N3,** a first information block is sent in step S30; and location information is received in step S31;
In Embodiment 6, the first information block is used for determining a first reference signal resource set; the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of {a same subchannel, a same bandwidth corresponding to a same PRB, a same BWP, a same number of consecutive multi-carrier symbols, and a same slot}; measurement performed by the second node on the target reference signal is used for generating the location information; the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs; a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

As an embodiment, the first time window includes multiple time-domain resource blocks.

As an embodiment, the first time window includes multiple time-domain resource blocks in time domain in the first resource pool in this application.

As an embodiment, any one of the multiple time-domain resource blocks included in the first time window is one of the multiple time-domain resource blocks included in time domain in the first resource pool.

As an embodiment, the first time window includes multiple slots.

As an embodiment, the length of the first time window is configured with higher layer signaling.

As an embodiment, the length of the first time window is pre-configured.

As an embodiment, the length of the first time window is related to subcarrier spacing in the first resource pool in this application.

As an embodiment, the first time window is a CBR measurement window.

As an embodiment, the first time window is a time window for CBR measurement.

As an embodiment, the channel measurement includes CBR measurement.

As an embodiment, the channel measurement includes measurement for determining an SL CR (Sidelink Channel Occupancy Ratio).

As an embodiment, the M1 candidate reference signal resources correspond to M1 ResourceIDs, respectively.

As an embodiment, the first reference signal resource set includes the M1 candidate reference signal resources.

As an embodiment, the M1 candidate reference signal resources all use a same CombSize.

As an embodiment, the M1 candidate reference signal resources all use a same ReOffset.

As an embodiment, the M1 candidate reference signal resources all use a same frequency-domain density.

As an embodiment, the M1 candidate reference signal resources all use a same time-domain density.

As an embodiment, the M1 candidate reference signal resources belong to a same reference signal resource set.

As an embodiment, the target reference signal starts to be sent at a sub-frame n, and the first time window corresponds to a sub-frame (n-a) to a sub-frame (n-1), where a is a positive integer greater than 1.

As a sub-embodiment of this embodiment, a is related to the subcarrier spacing used by the target reference signal.

As a sub-embodiment of this embodiment, a is equal to 100 or 100-2^{µ}, and the subcarrier spacing used by the target reference signal is used for determining a value of µ.

As an embodiment, a time-domain resource occupied by the target reference signal corresponds to a first target time-domain resource block, and the first target time-domain resource block is used for determining the first time window.

As a sub-embodiment of this embodiment, the first target time-domain resource block is used for determining a second target time-domain resource block, and the second target time-domain resource block is used for determining the first time window.

As a sub-embodiment of this embodiment, the second target time-domain resource block includes multiple multi-carrier symbols.

As a sub-embodiment of this embodiment, the second target time-domain resource block includes a slot.

As a sub-embodiment of this embodiment, the second target time-domain resource block belongs to one slot.

As a sub-embodiment of this embodiment, the second target time-domain resource block is a slot.

As a sub-embodiment of this embodiment, the second target time-domain resource block is a sidelink slot.

As a sub-embodiment of this embodiment, the second target time-domain resource block precedes the first target time-domain resource block, and the second target time-domain resource block precedes the first target time-domain resource block by N0 slots, where N0 is a positive integer.

As a sub-embodiment of this embodiment, an index of the second target time-domain resource block in the multiple time-domain resource blocks included in the first resource pool is equal to a difference between an index of the first target time-domain resource block in the multiple time-domain resource blocks included in the first resource pool and N0.

As a sub-embodiment of this embodiment, the N0 slots are congestion control processing time.

As a sub-embodiment of this embodiment, a value of N0 is related to the subcarrier spacing in the first resource pool.

As a sub-embodiment of this embodiment, a first time-domain resource block of the multiple time-domain resource blocks included in the first time window precedes the second target time-domain resource block by a time-domain resource blocks, and a last time-domain resource block of the multiple time-domain resource blocks included in the first time window precedes the second target time-domain resource block by one time-domain resource block, where a is a positive integer.

As a sub-embodiment of this embodiment, a first slot of the multiple slots included in the first time window precedes the second target time-domain resource block by a slots, and a last slot of the multiple slots included in the first time window precedes the second target time-domain resource block by one slot, where a is a positive integer.

As a sub-embodiment of this embodiment, the first time window is [n-a, n-1], where n is an index of the second target time-domain resource block.

As a sub-embodiment of this embodiment, the length of the first time window is a.

As a sub-embodiment of this embodiment, the length of the first time window is equal to 100.

As a sub-embodiment of this embodiment, the length of the first time window is equal to 100×2^{µ}, where µ is related to the subcarrier spacing in the first resource pool.

As an embodiment, the target threshold is used for SL CR evaluation of the M1 candidate reference signal resources.

As an embodiment, the target threshold is used for SL CBR measurement of the M1 candidate reference signal resources.

As an embodiment, the target threshold is configured.

As an embodiment, the target threshold is pre-configured.

As an embodiment, the unit of the target threshold is watt.

As an embodiment, the unit of the target threshold is milliwatt.

As an embodiment, the unit of the target threshold is dBm (decibel-milliwatt).

As an embodiment, the target threshold is used for SL CBR measurement.

As an embodiment, the target threshold is used for SL CR evaluation.

As an embodiment, the target threshold is used for determining whether a positioning reference signal for SL can be sent.

As an embodiment, the target threshold is used for determining whether a positioning reference signal for SL can be sent.

Typically, the M1 candidate reference signal resources correspond to same configuration information, where the configuration information includes at least one of a comb size, number of occupied symbols, number of occupied subcarriers, a repetition factor, a periodicity, or a transmit power value.

As an embodiment, the M1 candidate reference signal resources correspond to a same comb size.

As an embodiment, the M1 candidate reference signal resources occupy a same number of symbols in a same time-domain length.

As a sub-embodiment of this embodiment, the time-domain length is one slot.

As a sub-embodiment of this embodiment, the time-domain length is multiple consecutive slots.

As a sub-embodiment of this embodiment, the time-domain length is one sub-frame.

As a sub-embodiment of this embodiment, the time-domain length is one system frame.

As an embodiment, the M1 candidate reference signal resources occupy a same number of subcarriers in a same frequency bandwidth.

As a sub-embodiment of this embodiment, the frequency bandwidth is one subchannel.

As a sub-embodiment of this embodiment, the frequency bandwidth is one BWP.

As a sub-embodiment of this embodiment, the frequency bandwidth is one RB.

As a sub-embodiment of this embodiment, the time-domain length is multiple consecutive RBs.

As an embodiment, the M1 candidate reference signal resources use a same repetition factor.

As an embodiment, the M1 candidate reference signal resources correspond to a same periodicity.

As an embodiment, the M1 candidate reference signal resources use a same transmit power value.

Typically, the first reference signal resource and the second reference signal resource correspond to different configuration information, where the configuration information includes at least one of the comb size, the number of occupied symbols, the number of occupied subcarriers, the repetition factor, the periodicity, or the transmit power value.

As an embodiment, the first reference signal resource and the second reference signal resource correspond to different comb sizes.

As an embodiment, the first reference signal resource and the second reference signal resource occupy different numbers of symbols in a same time-domain length.

As an embodiment, the first reference signal resource and the second reference signal resource occupy different numbers of subcarriers in a same frequency bandwidth.

As an embodiment, the first reference signal resource and the second reference signal resource use different repetition factors, respectively.

As an embodiment, the first reference signal resource and the second reference signal resource correspond to different periodicities, respectively.

As an embodiment, the first reference signal resource and the second reference signal resource correspond to different transmit power values, respectively.

Typically, the first reference signal resource and the second reference signal resource correspond to a first threshold and a second threshold, respectively, the first threshold and the second threshold being different, and both the first threshold and the second threshold being used for sidelink congestion control.

As an embodiment, the first threshold is used for SL CR evaluation of the first reference signal resource.

As an embodiment, the first threshold is used for SL CBR measurement of the first reference signal resource.

As an embodiment, the second threshold is used for SL CR evaluation of the second reference signal resource.

As an embodiment, the second threshold is used for SL CBR measurement of the second reference signal resource.

As an embodiment, the first threshold is configured.

As an embodiment, the first threshold is pre-configured.

As an embodiment, the unit of the first threshold is watt.

As an embodiment, the unit of the first threshold is milliwatt.

As an embodiment, the unit of the first threshold is dBm (decibel-milliwatt).

As an embodiment, the second threshold is configured.

As an embodiment, the second threshold is pre-configured.

As an embodiment, the unit of the second threshold is watt.

As an embodiment, the unit of the second threshold is milliwatt.

As an embodiment, the unit of the second threshold is dBm (decibel-milliwatt).

As an embodiment, the first threshold is used for being compared with a result of RSSI measurement for the first reference signal resource.

As an embodiment, the first threshold is used for determining whether the first reference signal resource is busy.

As an embodiment, the first threshold is used for determining whether the first reference signal resource is occupied.

As an embodiment, the first threshold is used for determining whether the first reference signal resource is available.

As an embodiment, the first threshold is used for being compared with a result of RSSI measurement for a reference signal resource using the same configuration information as the first reference signal resource.

As an embodiment, the first threshold is used for determining whether the reference signal resource using the same configuration information as the first reference signal resource is busy.

As an embodiment, the first threshold is used for determining whether the reference signal resource using the same configuration information as the first reference signal resource is occupied.

As an embodiment, the first threshold is used for determining whether the reference signal resource using configuration information the same as the first reference signal resource is available.

As an embodiment, the second threshold is used for being compared with a result of RSSI measurement for the second reference signal resource.

As an embodiment, the second threshold is used for determining whether the second reference signal resource is busy.

As an embodiment, the second threshold is used for determining whether the second reference signal resource is occupied.

As an embodiment, the second threshold is used for determining whether the second reference signal resource is available.

As an embodiment, the second threshold is used for being compared with a result of RSSI measurement for a reference signal resource using the same configuration information as the second reference signal resource.

As an embodiment, the second threshold is used for determining whether the reference signal resource using the same configuration information as the second reference signal resource is busy.

As an embodiment, the second threshold is used for determining whether the reference signal resource using the same configuration information as the second reference signal resource is occupied.

As an embodiment, the second threshold is used for determining whether the reference signal resource using the same configuration information as the second reference signal resource is available.

As an embodiment, the first threshold is used for SL CBR measurement.

As an embodiment, the first threshold is used for SL CR evaluation.

As an embodiment, the second threshold is used for SL CBR measurement.

As an embodiment, the second threshold is used for SL CR evaluation.

As an embodiment, the first threshold is used for determining whether a positioning reference signal for SL can be sent.

As an embodiment, the second threshold is used for determining whether the positioning reference signal for SL can be sent.

Typically, the K1 reference signal resources include the M1 candidate reference signal resources, where K1 is a positive integer not less than M1.

As an embodiment, any one of the M1 candidate reference signal resources is one of the K1 reference signal resources.

As an embodiment, a ResourceID used by any one of the M1 candidate reference signal resources is equal to a ResourceID used by one of the K1 reference signal resources.

As an embodiment, an identity used by any one of the M1 candidate reference signal resources is equal to an identity used by one of the K1 reference signal resources.

As an embodiment, an identifier used by any one of the M1 candidate reference signal resources is equal to an identifier used by one of the K1 reference signal resources.

Typically, any one of M2 RSSIs obtained by measurement exceeds each of M2 candidate reference signal resources of the M1 candidate reference signal resources by the target threshold; the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool includes Q reference signal resources within the first time window, any one of the M2 candidate reference signal resources is one of the Q reference signal resources, and Q is a positive integer greater than M2.

As an embodiment, the first resource pool includes a sidelink resource pool.

As an embodiment, the first resource pool is used for sidelink transmission.

As an embodiment, the first resource pool is used for sidelink communication.

As an embodiment, the first resource pool is used for sidelink positioning.

As an embodiment, the first resource pool is used for SL PRS (Sidelink Positioning Reference Signal) transmission.

As an embodiment, the first resource pool is dedicated for SL PRS transmission.

As an embodiment, the first resource pool is used for SL PRS and SCI (Sidelink Control Information) transmission.

As an embodiment, the first resource pool includes multiple REs (Resource Elements).

As an embodiment, any RE in the first resource pool occupies one multi-carrier symbol in time domain, and occupies one subcarrier in frequency domain.

As an embodiment, the first resource pool includes multiple time-domain resource blocks in time domain, and the first resource pool includes multiple frequency-domain resource blocks in frequency domain.

As an embodiment, the multiple time-domain resource blocks included in the time domain in the first resource pool are multiple slots, respectively.

As an embodiment, the multiple time-domain resource blocks included in time domain in the first resource pool are multiple multi-carrier symbols, respectively.

As an embodiment, any one of the multiple time-domain resource blocks included in time domain in the first resource pool belongs to one slot.

As an embodiment, any one of the multiple time-domain resource blocks included in time domain in the first resource pool includes at least one multi-carrier symbol.

As an embodiment, any one of the multiple time-domain resource blocks included in time domain in the first resource pool includes multiple multi-carrier symbols.

As an embodiment, the multiple frequency-domain resource blocks included in frequency domain in the first resource pool are multiple subchannels, respectively.

As an embodiment, the multiple frequency-domain resource blocks included in frequency domain in the first resource pool are multiple RBs, respectively.

As an embodiment, the multiple frequency-domain resource blocks included in frequency domain in the first resource pool are multiple PRBs (Physical Resource Blocks), respectively.

As an embodiment, the multiple frequency-domain resource blocks included in frequency domain in the first resource pool are multiple subcarriers, respectively.

As an embodiment, any one of the multiple frequency-domain resource blocks included in frequency domain in the first resource pool belongs to one subchannel.

As an embodiment, any one of the multiple frequency-domain resource blocks included in frequency domain in the first resource pool belongs to one RB.

As an embodiment, any one of the multiple frequency-domain resource blocks included in frequency domain in the first resource pool belongs to one PRB.

As an embodiment, any one of the multiple frequency-domain resource blocks included in frequency domain in the first resource pool includes at least one subcarrier.

As an embodiment, any one of the multiple frequency-domain resource blocks included in frequency domain in the first resource pool includes at least one RB.

As an embodiment, any one of the multiple frequency-domain resource blocks included in frequency domain in the first resource pool includes at least one PRB.

As an embodiment, any one of the multiple frequency-domain resource blocks included in frequency domain in the first resource pool includes multiple subcarriers.

As an embodiment, the multiple time-domain resource blocks included in time domain in the first resource pool are multiple slots, respectively, and the multiple frequency-domain resource blocks included in frequency domain in the first resource pool are multiple PRBs, respectively.

As an embodiment, the first resource pool includes multiple time-frequency resource blocks.

As an embodiment, any one of the multiple time-frequency resource blocks included in the first resource pool in the time-domain is one time-domain resource block in the first resource pool in time domain, and any one of the multiple time-frequency resource blocks included in the first resource pool is one frequency-domain resource block in the first resource pool in frequency domain.

As an embodiment, any one of the multiple time-frequency resource blocks included in the first resource pool belongs to one time-domain resource block in the first resource pool in time domain, and any one of the multiple time-frequency resource blocks included in the first resource pool is one frequency-domain resource block in the first resource pool in frequency domain.

As an embodiment, any one of the multiple time-frequency resource blocks included in the first resource pool belongs to one time-domain resource block in the first resource pool in time domain, and any one of the multiple time-frequency resource blocks included in the first resource pool belongs to one frequency-domain resource block in the first resource pool in frequency domain.

As an embodiment, any one of the multiple time-frequency resource blocks included in the first resource pool in the time-domain is one time-domain resource block in the first resource pool in time domain, and any one of the multiple time-frequency resource blocks included in the first resource pool includes at least one frequency-domain resource block in the first resource pool in frequency domain.

As an embodiment, any one of the multiple time-frequency resource blocks included in the first resource pool includes at least one time-domain resource block in the first resource pool in time domain, and any one of the multiple time-frequency resource blocks included in the first resource pool belongs to one frequency-domain resource block in the first resource pool in frequency domain.

As an embodiment, any one of the multiple time-frequency resource blocks included in the first resource pool includes at least one time-domain resource block in the first resource pool in time domain, and any one of the multiple time-frequency resource blocks included in the first resource pool includes at least one frequency-domain resource block in the first resource pool in frequency domain.

As an embodiment, the multiple time-frequency resource blocks included in the first resource pool are the multiple time-domain resource blocks in the first resource pool in time domain, respectively, and the multiple time-frequency resource blocks included in the first resource pool are the multiple frequency-domain resource blocks in the first resource pool in frequency domain, respectively.

As an embodiment, the first channel busy ratio is a proportion of the M2 RSSIs to the M1 RSSIs.

As an embodiment, the first channel busy ratio is a proportion of the M2 candidate reference signal resources to the M1 candidate reference signal resources.

As an embodiment, the first channel busy ratio is a proportion of the M2 RSSIs to Q candidate RSSIs corresponding to the Q reference signal resources, where Q is a positive integer greater than M2.

As an embodiment, the first channel busy ratio is a proportion of the M1 candidate reference signal resources to the Q reference signal resources, where Q is a positive integer greater than M2.

As an embodiment, the first channel busy ratio is a ratio of M2 to M1.

As an embodiment, the first channel busy ratio is a quotient of M2 divided by M1.

As an embodiment, the first channel busy ratio is a ratio of M2 to a first sample number.

As an embodiment, the first sample number is M1.

As an embodiment, the first sample number is Q.

As an embodiment, the first channel busy ratio is a decimal.

As an embodiment, the first channel busy ratio is a percentage.

### Embodiment 7

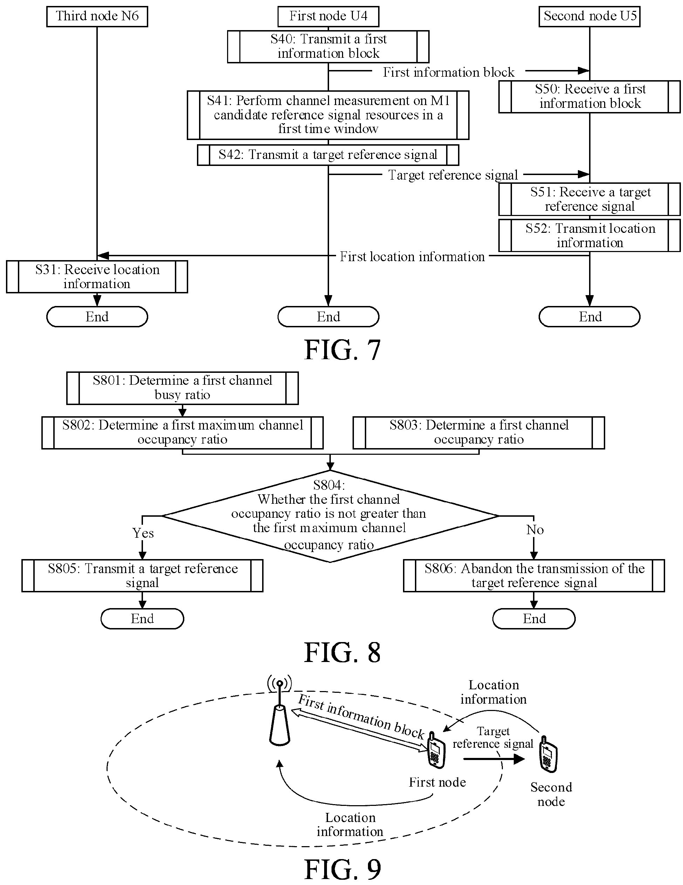

Embodiment 7 illustrates a flowchart of a target reference signal, as shown in FIG. 7. In FIG. 7, a first node U4, a second node U5, and a third node N6 communicate with each other via a radio link. It should be particularly noted that the order in this embodiment does not limit a signal transmission order and an implementation order in this application. Without conflict, the embodiments, sub-embodiments, and subsidiary embodiments in Embodiment 7 can be applied to Embodiments 6 and 8. On the contrary, without conflict, any embodiment, sub-embodiment, and subsidiary embodiment in Embodiments 6 and 8 in this application can be applied to Embodiment 7.

For the **first node U4,** a first information block is sent in step S40; channel measurement is performed on M1 candidate reference signal resources in a first time window in step S41; and a target reference signal is sent in step S42.

For the **second node U5,** a first information block is received in step S50; a target reference signal is received in step S51; and location information is transmitted in step S52.

For the **third node N6,** location information is received in step S60.

In Embodiment 7, the first information block is used for determining a first reference signal resource set; the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; a definition of the given resource unit includes at least one of {a same subchannel, a same bandwidth corresponding to a same PRB, a same BWP, a same number of consecutive multi-carrier symbols, and a same slot}; measurement performed by the second node on the target reference signal is used for generating the location information; the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs; a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

Typically, the M1 candidate reference signal resources correspond to same configuration information, where the configuration information includes at least one of a comb size, number of occupied symbols, number of occupied subcarriers, a repetition factor, a periodicity, or a transmit power value.

Typically, the first reference signal resource and the second reference signal resource correspond to different configuration information, where the configuration information includes at least one of the comb size, the number of occupied symbols, the number of occupied subcarriers, the repetition factor, the periodicity, or the transmit power value.

Typically, the first reference signal resource and the second reference signal resource correspond to a first threshold and a second threshold, respectively, the first threshold and the second threshold being different, and both the first threshold and the second threshold being used for sidelink congestion control.

Typically, the K1 reference signal resources include the M1 candidate reference signal resources, where K1 is a positive integer not less than M1.

Typically, any one of M2 RSSIs obtained by measurement exceeds each of M2 candidate reference signal resources of the M1 candidate reference signal resources by the target threshold; the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool includes Q reference signal resources within the first time window, any one of the M2 candidate reference signal resources is one of the Q reference signal resources, and Q is a positive integer greater than M2.

As an embodiment, the first information block is generated at the third node.

As an embodiment, the first information block is forwarded to the second node via the first node.

### Embodiment 8

Embodiment 8 illustrates a flowchart of determining whether to transmit a target reference signal according to an embodiment of this application, as shown in FIG. 8.

In Embodiment 8, a first channel busy ratio is determined in step S801; a first maximum channel occupancy ratio is determined in step S802; a first channel occupancy ratio is determined in step S803; whether the first channel occupancy ratio is not greater than the first maximum channel occupancy ratio is judged in step S804. when the first channel occupancy ratio is not greater than the first channel occupancy ratio, step S805 is performed, that is, a target reference signal is sent; and when the first channel occupancy ratio is greater than the first channel occupancy ratio, step S806 is performed, that is, the transmission of the target reference signal is abandoned; where the first information busy ratio is used for determining the first maximum channel occupancy ratio; and the first channel occupancy ratio is a proportion of resources transmitted or granted within a second time window.

As an embodiment, the second time window includes multiple time-domain resource blocks.

As an embodiment, the second time window includes multiple time-domain resource blocks in time domain in the first resource pool.

As an embodiment, the second time window includes multiple slots.

As an embodiment, the length of the second time window is configured with higher layer signaling.

As an embodiment, the length of the second time window is pre-configured.

As an embodiment, the length of the second time window is related to subcarrier spacing in the first resource pool.

As an example, the second time window is a CR evaluation window.

As an example, the second time window is a time window CR evaluation.

As an embodiment, the first target time-domain resource block is used for determining the second target time-domain resource block, and the second target time-domain resource block is used for determining the first time window and the second time window.

As an embodiment, a first time-domain resource block of the multiple time-domain resource blocks included in the second time window precedes the second target time-domain resource block by a time-domain resource blocks, and a last time-domain resource block of the multiple time-domain resource blocks included in the second time window is b time-domain resource blocks behind the second target time-domain resource block, where a is a positive integer, and b is a non-negative integer.

As an embodiment, a first slot of the multiple slots included in the second time window precedes the second target time-domain resource block by a slots, and a last slot of the multiple slots included in the second time window is b slots behind the second target time-domain resource block, where a is a positive integer, and b is a non-negative integer.

As an embodiment, the second time window is [n-a, n+b], and n is an index of the second target time-domain resource block.

As an embodiment, the length of the second time window is a+b+1.

As an embodiment, the length of the second time window is equal to 1000.

As an embodiment, the length of the second time window is equal to 1000×2*^{µ}*, and *µ* is related to the subcarrier spacing in the first resource pool.

As an embodiment, b is equal to 0.

As an embodiment, b is a positive integer.

As an embodiment, the sum of a, b, and 1 is equal to 1000.

As an embodiment, the sum of a, b, and 1 is equal to 1000×2^{µ}, *µ* is related to the subcarrier spacing in the first resource pool.

As an example, the second time window includes the first time window.

As an embodiment, the second time window includes the first time window and the second time subwindow.

As an embodiment, the second time subwindow includes b+1 time-domain resource blocks.

As an embodiment, the second time subwindow includes b+1 slots.

As an embodiment, the second time subwindow is [n, n+b], where n is an index of the second target time-domain resource block.

As an embodiment, the length of the first time window is equal to the sum of the length of the first time window and the length of the second time subwindow.

As an embodiment, b is equal to 0, and the length of the second time subwindow is 1.

As an embodiment, the first resource pool includes Q1 first-type resources within the second time window.

As an embodiment, the second time window includes the Q1 first-type resources in the first resource pool, where Q1 is a positive integer greater than 1.

As an embodiment, the Q1 first-type resources in the first resource pool are within the second time window in time domain, where Q1 is a positive integer greater than 1.

As an embodiment, Q1 first-type resources are configured for the first resource pool within the second time window, where Q1 is a positive integer.

As an embodiment, the second time window includes Q1 time-domain resources of the first-type resources.

As an embodiment, the second time window includes Q1 time-domain resources of the first-type resources, where Q1 is a positive integer greater than 1.

As an embodiment, the second time window includes a time-domain resource of any one of the Q1 first-type resources.

As an embodiment, a resource occupied by the first positioning reference signal is one of the Q1 first-type resources.

As an embodiment, the first resource pool includes Q0 candidate resources within the second time window, where Q0 is a positive integer greater than Q1.

As an embodiment, Q0 candidate resources are configured for the first resource pool within the second time window, where Q0 is a positive integer greater than Q1.

As an embodiment, the first node transmits at least one first-type positioning reference signal on at least one first-type resource within the first time window.

As an embodiment, the first positioning reference signal belongs to the first-type positioning reference signal.

As an embodiment, a resource occupied by the first-type positioning reference signal is the first-type resource in the first resource pool.

As an embodiment, the number of the first-type resources occupied for transmitting the first-type positioning reference signal within the first time window is not less than 1.

As an embodiment, the first node does not transmit any first-type positioning reference signal on any first-type resource within the first time window.

As an embodiment, the number of first-type resources occupied for transmitting the first-type positioning reference signals within the first time window is equal to 0.

As an embodiment, the first channel occupancy ratio is a proportion of the sum of the number of first-type resources occupied for transmitting the first-type positioning reference signal within the first time window and the number of first-type resources granted within the second time subwindow to the Q1 first-type resources.

As an embodiment, the first channel occupancy ratio is a proportion of the sum of the number of first-type resources occupied for transmitting the first-type positioning reference signal within the first time window and the number of first-type resources granted within the second time subwindow to Q1.

As an embodiment, the first channel occupancy ratio is a quotient of the sum of the number of first-type resources occupied for transmitting the first-type positioning reference signal within the first time window and the number of first-type resources granted within the second time subwindow divided by Q1.

As an embodiment, the first channel occupancy ratio is a proportion of the sum of the number of first-type resources occupied for transmitting the first-type positioning reference signal within the first time window and the number of first-type resources granted within the second time subwindow to the second sample.

As an embodiment, the first channel occupancy ratio is a proportion of the sum of the number of first-type resources occupied for transmitting the first-type positioning reference signal within the first time window and the number of first-type resources granted within the second time subwindow to the second sample.

As an embodiment, the first channel occupancy ratio is a quotient of the sum of the number of first-type resources occupied for transmitting the first-type positioning reference signal within the first time window and the number of first-type resources granted with the second time subwindow divided by the second sample.

As an embodiment, the third sample is equal to Q1.

As an embodiment, the third sample is equal to Q0.

As an embodiment, the first channel occupancy ratio is a decimal.

As an embodiment, the first channel occupancy ratio is a percentage.

As an embodiment, a maximum channel occupancy ratio list includes multiple maximum channel occupancy ratios, where the multiple maximum channel occupancy ratios are in a one-to-one correspondence with multiple channel busy ratio ranges, respectively; and the first maximum channel occupancy ratio is one of the multiple maximum channel occupancy ratios.

As an embodiment, the first channel busy ratio belongs to one of the multiple channel busy ratio ranges, and the channel busy ratio range to which the first channel busy ratio belongs is used for determining the first maximum channel occupancy ratio from the multiple maximum channel occupancy ratios included in the maximum channel occupancy ratio list.

As an embodiment, the first channel occupancy ratio is not greater than the first maximum channel occupancy ratio.

As an embodiment, the first channel occupancy ratio is less than the first maximum channel occupancy ratio.

As an embodiment, the first channel occupancy ratio is equal to the first maximum channel occupancy ratio.

As an embodiment, the first channel occupancy ratio is greater than the first maximum channel occupancy ratio.

As an embodiment, the first channel occupancy ratio is not greater than the first maximum channel occupancy ratio, and the first positioning reference signal is sent on the first target time-domain resource block.

As an embodiment, the first channel occupancy ratio is greater than the first maximum channel occupancy ratio, and the transmitting of the first positioning reference signal on the first target time-domain resource block is abandoned.

As an embodiment, the first positioning reference signal is sent on the first target time-domain resource block when the first channel occupancy ratio is not greater than the first maximum channel occupancy ratio.

### Embodiment 9

Embodiment 9 illustrates a schematic diagram of a relationship between a first node, a second node, and a third node according to an embodiment of this application, as shown in FIG. 9.

In Embodiment 9, the third node configures a first information block, and the first node receives the first information block. The first node performs channel sensing and determines that a target reference signal is sent. The second node receives the target reference signal, generates location information for measurement on the target reference signal, and then transmits the location information to the third node.

As an embodiment, the third node is a positioning server.

As an embodiment, the second node receives the first information block.

As an embodiment, the first node transmits a radio signal to the second node to indicate the transmission of the target reference signal.

As an embodiment, the third node is a base station.

As an embodiment, the first node is a terminal.

As an embodiment, the first node is an RSU (Road Side Unit).

As an embodiment, the second node is a terminal.

As an embodiment, the second node is an RSU.

As an embodiment, the first node receives the location information from the second node, and forwards the location information to the third node.

### Embodiment 10

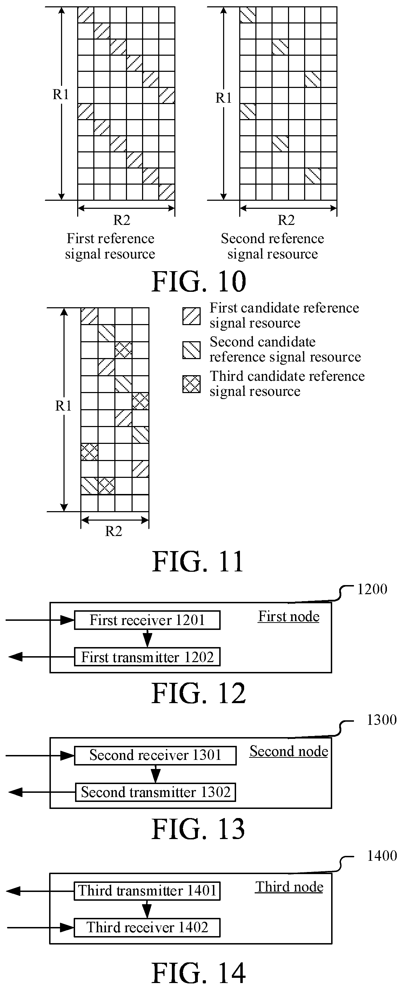

Embodiment 10 illustrates a schematic diagram of a first reference signal resource and a second reference signal resource, as shown in FIG. 10. In FIG. 10, the first reference signal resource occupies P1 REs in the given resource unit, where P1 is a positive integer greater than 1; the second reference signal resource occupies P2 REs in the given resource unit, where P2 is a positive integer greater than 1; where P1 is L1 times of P2, and L1 is a positive integer greater than 1.

As an embodiment, the P2 REs are a subset of the P1 REs.

As an embodiment, L1 is one of {2, 4, 8, 16, 32}.

As an embodiment, the first reference signal resource and the second reference signal resource correspond to two different patterns, respectively.

As an embodiment, the first reference signal resource and the second reference signal resource correspond to different repetitions of a same pattern in frequency domain.

As an embodiment, the first reference signal resource and the second reference signal resource correspond to different repetitions of a same pattern in time domain.

As an embodiment, the given resource unit occupies R1 consecutive subcarriers in frequency domain, and occupies R2 consecutive multi-carrier symbols in time domain. R1 and R2 are both a positive integer greater than 1.

As a sub-embodiment of this embodiment, R1 is a positive integer multiple of 12.

As a sub-embodiment of this embodiment, R2 is equal to one of {2, 4, 6, 12}.

As a sub-embodiment of this embodiment, R1 shown in FIG. 10 is equal to 12, and R2 is equal to 6.

### Embodiment 11

Embodiment 11 illustrates a schematic diagram of M1 candidate reference signal resources, as shown in FIG. 11. In FIG. 11, the M1 candidate reference signal resources all occupy a same number of REs in the given resource unit. The figure shows three of the M1 candidate reference signal resources, and the three candidate reference signal resources are a first candidate reference signal resource, a second candidate reference signal resource, and a third candidate reference signal resource, respectively. The given resource unit as shown occupies R1 consecutive subcarriers in frequency domain, and occupies R2 consecutive multi-carrier symbols in time domain, where R1 is equal to 12, and R2 is equal to 4.

As an embodiment, REs occupied by any two of the M1 candidate reference signal resources are orthogonal.

As an embodiment, the M1 candidate reference signal resources correspond to a same aggregation level.

As an embodiment, the M1 candidate reference signal resources correspond to a same repetition factor.

### Embodiment 12

Embodiment 12 illustrates a structural block diagram of a first node, as shown in FIG. 12. In FIG. 12, a first node 1200 includes a first receiver 1201 and a first transmitter 1202.

The first receiver 1201 is configured to receive a first information block, where the first information block is used for determining a first reference signal resource set.

The first transmitter 1202 is configured to transmit a target reference signal.

In Embodiment 12, the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
- a same subchannel;
- a bandwidth corresponding to a same PRB;
- a same BWP;
- a same number of consecutive OFDM symbols;
- a same slot.

As an embodiment, the first node includes:
a first receiver 1201, configured to perform channel measurement on M1 candidate reference signal resources in a first time window,
where the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs; a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

As an embodiment, the M1 candidate reference signal resources correspond to same configuration information, where the configuration information includes at least one of a comb size, number of occupied symbols, number of occupied subcarriers, a repetition factor, a periodicity, or a transmit power value.

As an embodiment, the first reference signal resource and the second reference signal resource correspond to different configuration information, where the configuration information includes at least one of the comb size, the number of occupied symbols, the number of occupied subcarriers, the repetition factor, the periodicity, or the transmit power value.

As an embodiment, the first reference signal resource and the second reference signal resource correspond to a first threshold and a second threshold, respectively, the first threshold and the second threshold being different, and both the first threshold and the second threshold being used for sidelink congestion control.

As an embodiment, the K1 reference signal resources include the M1 candidate reference signal resources, K1 being a positive integer not less than M1.

As an embodiment, any one of M2 RSSIs obtained by measurement exceeds each of M2 candidate reference signal resources of the M1 candidate reference signal resources by the target threshold. the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool includes Q reference signal resources within the first time window, any one of the M2 candidate reference signal resources is one of the Q reference signal resources, and Q is a positive integer greater than M2.

As an embodiment, the first receiver 1201 includes at least the first four of the antenna 452, the receiver 454, the multi-antenna receive processor 458, the receive processor 456, and the controller/processor 459 in Embodiment 4.

As an embodiment, the first transmitter 1202 includes at least the first four of the antenna 452, the transmitter 454, the multi-antenna transmit processor 457, the transmit processor 468, and the controller/processor 459 in Embodiment 4.

### Embodiment 13

Embodiment 13 illustrates a structural block diagram of a second node, as shown in FIG. 13. In FIG. 13, the second node 1300 includes a second receiver 1301.

The second receiver 1301 is configured to receive a target reference signal.

In Embodiment 13, the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit includes at least one of the following:
- a same subchannel;
- a bandwidth corresponding to a same PRB;
- a same BWP;
- a same number of consecutive OFDM symbols;
- a same slot.

As an embodiment, the second node includes:
the second receiver 1301, configured to receive a first information block;
where the first information block is used for determining a first reference signal resource set.

As an embodiment, the second node includes:
the second transmitter 1302, configured to transmit the first information block;
where the first information block is used for determining a first reference signal resource set.

As an embodiment, a sender of the target reference signal performs channel measurement on M1 candidate reference signal resources in a first time window; the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs; a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

As an embodiment, the M1 candidate reference signal resources correspond to same configuration information, where the configuration information includes at least one of a comb size, number of occupied symbols, number of occupied subcarriers, a repetition factor, a periodicity, or a transmit power value.

As an embodiment, the first reference signal resource and the second reference signal resource correspond to different configuration information, where the configuration information includes at least one of a comb size, number of occupied symbols, number of occupied subcarriers, a repetition factor, a periodicity, or a transmit power value.

As an embodiment, the first reference signal resource and the second reference signal resource correspond to a first threshold and a second threshold, respectively, the first threshold and the second threshold being different, and both the first threshold and the second threshold being used for sidelink congestion control.

As an embodiment, the K1 reference signal resources include the M1 candidate reference signal resources, K1 being a positive integer not less than M1.

As an embodiment, any one of M2 RSSIs obtained by measurement exceeds each of M2 candidate reference signal resources of the M1 candidate reference signal resources by the target threshold. the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool includes Q reference signal resources within the first time window, any one of the M2 candidate reference signal resources is one of the Q reference signal resources, and Q is a positive integer greater than M2.

As an embodiment, the second node includes:
the second transmitter 1302, configured to transmit location information;
where measurement on the target reference signal is used for generating the location information.

As an embodiment, the second receiver 1301 includes at least the first four of the antenna 420, the receiver 418, the multi-antenna receive processor 472, the receive processor 470, and the controller/processor 475 in Embodiment 4.

As an embodiment, the second transmitter 1302 includes at least the first four of the antenna 420, the transmitter 418, the multi-antenna transmit processor 471, the transmit processor 414, and the controller/processor 475 in Embodiment 4.

### Embodiment 14

Embodiment 14 illustrates a structural block diagram of a third node, as shown in FIG. 14. In FIG. 14, the third node 1400 includes a third transmitter 1401 and a third receiver 1402.

The third transmitter 1401 is configured to transmit a first information block, where the first information block is used for determining a first reference signal resource set.

The third receiver 1402 is configured to receive location information.

In Embodiment 14, the first reference signal resource set includes K1 reference signal resources, where K1 is a positive integer greater than 1; the target reference signal occupies one of the K1 reference signal resources; the K1 reference signal resources at least include a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; measurement performed by a recipient of the target reference signal on the target reference signal is used for generating the location information, and the recipient of the target reference signal transmits the location information; and a definition of the given resource unit includes at least one of the following:
- a same subchannel;
- a bandwidth corresponding to a same PRB (Physical Resource Block);
- a same BWP (Bandwidth Part);
- a same number of consecutive OFDM symbols;
- a same slot.

As an embodiment, the third transmitter 1401 includes at least the first four of the antenna 420, the transmitter 418, the multi-antenna transmit processor 471, the transmit processor 416, and the controller/processor 475 in Embodiment 4.

As an embodiment, the third receiver 1402 includes at least the first four of the antenna 420, the receiver 418, the multi-antenna receive processor 472, the receive processor 470, and the controller/processor 475 in Embodiment 4.

Those skilled in the art can understand that all or some steps of the foregoing methods can be implemented by a program instructing related hardware, and the program may be stored in a computer-readable memory, such as a read-only memory, a hard disk or an optical disk. Optionally, all or some steps of the foregoing embodiments can also be implemented by using one or more integrated circuits. Accordingly, each module unit in the foregoing embodiments can be implemented in the form of hardware, or may be implemented in the form of a software functional module. This application is not limited to any specific combination of software and hardware. The first node in this application includes, but is not limited to, a wireless communication device such as a mobile phone, a tablet computer, a notebook computer, a network adapter, a low-power consumption device, an eMTC device, an NB-IoT device, an in-vehicle communication device, a means of transportation, a vehicle, an RSU (Road Side Unit), an aircraft, an airplane, an unmanned aerial vehicle, or a remote control aircraft. The second node in this application includes, but is not limited to, a wireless communication device, such as a macrocellular base station, a microcellular base station, a small cell base station, a Femtocell, a relay base station, eNB, gNB, a transmitter receiver point (TRP), a GNSS (Global Navigation Satellite System), a relay satellite, a satellite base station, an air base station, RSU, an unmanned aerial vehicle, a test device, for example, a transmitter-receiver set or a signaling tester that simulates some functions of a base station.

Those skilled in the art should understand that the disclosure can be implemented in other specified forms without departing from the core or essential characteristics thereof. Therefore, the embodiments currently disclosed should be considered as descriptive rather than restrictive in any case. The scope of the disclosure is determined by the appended claims rather than the foregoing description, and all modifications within the equivalent meanings and regions thereof are considered to be included therein.

## Claims

1. A first node for wireless communication, comprising:
a first receiver, configured to receive a first information block, the first information block being used for determining a first reference signal resource set;
a first transmitter, configured to transmit a target reference signal,
wherein the first reference signal resource set comprises K1 reference signal resources, K1 being a positive integer greater than 1; the target reference signal occupies one of the K1 reference signal resources; the K1 reference signal resources at least comprise a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit comprises at least one of the following:
- a same subchannel;
- a bandwidth corresponding to a same PRB;
- a same BWP;
- a same number of consecutive multi-carrier symbols; and
- a same slot.

2. The first node according to claim 1, comprising:
the first receiver, configured to perform channel measurement on M1 candidate reference signal resources in a first time window,
wherein the M1 candidate reference signal resources occupy a same number of resource elements in the given resource unit, and a time-domain resource occupied by the target reference signal is used for determining the first time window; the channel measurement on the M1 candidate reference signal resources is used for determining M1 RSSIs; a first channel busy ratio is a proportion of the M1 RSSIs that are obtained by measurement within the first time window to exceed a target threshold; the first channel busy ratio is used for determining that the target reference signal is sent; at least one of the K1 reference signal resources corresponds to a same identity as one of the M1 candidate reference signal resources; and M1 is a positive integer greater than 1.

3. The first node according to claim 2, wherein the M1 candidate reference signal resources correspond to same configuration information, the configuration information comprising at least one of a comb size, number of occupied symbols, number of occupied subcarriers, a repetition factor, a periodicity, or a transmit power value.

4. The first node according to any one of claims 1 to 3, wherein the first reference signal resource and the second reference signal resource correspond to different configuration information, the configuration information comprising at least one of the comb size, the number of occupied symbols, the number of occupied subcarriers, the repetition factor, the periodicity, or the transmit power value.

5. The first node according to any one of claims 1 to 4, wherein the first reference signal resource and the second reference signal resource correspond to a first threshold and a second threshold, respectively, the first threshold and the second threshold being different, and both the first threshold and the second threshold being used for sidelink congestion control.

6. The first node according to any one of claims 2 to 5, wherein the K1 reference signal resources comprise the M1 candidate reference signal resources, K1 being a positive integer not less than M1.

7. The first node according to any one of claims 1 to 6, wherein any one of M2 RSSIs obtained by measurement exceeds each of M2 candidate reference signal resources of the M1 candidate reference signal resources by the target threshold; the proportion of the candidate reference signal resources that the RSSI obtained by measurement within the first time window exceeds by the first threshold is a ratio of M2 to a first sample number, and M2 is a positive integer not greater than M1; the first sample number is equal to M1, or the first sample number is equal to Q; and Q is a positive integer greater than 1; a first resource pool comprises Q reference signal resources within the first time window, any one of the M2 candidate reference signal resources is one of the Q reference signal resources, and Q is a positive integer greater than M2.

8. A second node for wireless communication, comprising:
a second receiver, configured to receive a target reference signal,
wherein the first reference signal resource set comprises K1 reference signal resources, K1 being a positive integer greater than 1; the target reference signal occupies one of the K1 reference signal resources; the K1 reference signal resources at least comprise a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit comprises at least one of the following:
- a same subchannel;
- a bandwidth corresponding to a same PRB;
- a same BWP;
- a same number of consecutive multi-carrier symbols; and
- a same slot.

9. A method used in a first node for wireless communication, comprising:
receiving a first information block, the first information block being used for determining a first reference signal resource set;
transmitting a target reference signal,
wherein the first reference signal resource set comprises K1 reference signal resources, K1 being a positive integer greater than 1; the target reference signal occupies one of the K1 reference signal resources; the K1 reference signal resources at least comprise a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit comprises at least one of the following:
- a same subchannel;
- a bandwidth corresponding to a same PRB;
- a same BWP;
- a same number of consecutive multi-carrier symbols; and
- a same slot.

10. A method used in a second node for wireless communication, comprising:
receiving a target reference signal,
wherein the first reference signal resource set comprises K1 reference signal resources, K1 being a positive integer greater than 1; the target reference signal occupies one of the K1 reference signal resources; the K1 reference signal resources at least comprise a first reference signal resource and a second reference signal resource; in a given resource unit, the first reference signal resource occupies more resource elements than the second reference signal resource; the first reference signal resource set is used for sidelink positioning; any resource element occupied by the second reference signal resource is occupied by the first reference signal resource, and at least one of resource elements occupied by the first reference signal resource is not occupied by the second reference signal resource; and a definition of the given resource unit comprises at least one of the following:
- a same subchannel;
- a bandwidth corresponding to a same PRB;
- a same BWP;
- a same number of consecutive multi-carrier symbols; and
- a same slot.
